(19) Europäisches Patentamt / European Patent Office / Office européen des brevets

(11) **EP 2 913 436 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(51) Int Cl.:
*E01C 19/28* (2006.01)    *E02D 3/039* (2006.01)

(21) Anmeldenummer: **15152581.3**

(22) Anmeldetag: **27.01.2015**

(54) **Verfahren zur Bestimmung eines durch eine Oszillationsbewegung einer Verdichterwalze hervorgerufenen Schlupfzustandes der Verdichterwalze eines Bodenverdichters**

Method for determining a slip in the compressor roller of a soil compressor caused by an oscillation movement of a compressor roller

Procédé de détermination d'un état de glissement d'un rouleau compresseur d'un compacteur de sol survenant en fonction d'un mouvement oscillatoire d'un rouleau compresseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014   DE 102014203585**

(43) Veröffentlichungstag der Anmeldung:
**02.09.2015   Patentblatt 2015/36**

(73) Patentinhaber: **Hamm AG**
**95643 Tirschenreuth (DE)**

(72) Erfinder:
 • **Pistrol, Johannes**
**2340 Mödling (AT)**

 • **Kopf, Fritz**
**1140 Wien (AT)**
 • **Völkel, Werner**
**92660 Neustadt (DE)**
 • **Villwock, Sebastian**
**95701 Pechbrunn (DE)**

(74) Vertreter: **Ruttensperger, Bernhard**
**Ruttensperger Lachnit Trossin Gomoll**
**Patent- und Rechtsanwälte PartG mbB**
**Arnulfstrasse 58**
**80335 München (DE)**

(56) Entgegenhaltungen:
**DE-C2- 3 590 610**

EP 2 913 436 B1

**Beschreibung**

Die vorliegende Erfindung betrifft ein Verfahren, mit welchem im Verlaufe eines mit einem wenigstens eine Verdichterwalze aufweisenden Bodenverdichter durchgeführten Verdichtungsvorgangs eine den Schlupf einer derartigen Verdichterwalze bezüglich des zu verdichtenden Untergrunds repräsentierende Größe ermittelt werden kann.

Zur Durchführung von Verdichtungsvorgängen im Erdbau oder im Straßenbau, beispielsweise zur Asphaltverdichtung, werden im Allgemeinen Bodenverdichter eingesetzt, die zumindest eine Verdichterwalze aufweisen. Mit einer derartigen Verdichterwalze bewegt sich der Bodenverdichter über den zu verdichtenden Untergrund, wobei durch die statische Auflast der Verdichterwalze eine Verdichtung erreicht wird. Um die Verdichtung effizienter zu gestalten, ist es bekannt, der im Wesentlichen gleichmäßigen Rotationsbewegung der Verdichterwalze während der entsprechend im Wesentlichen gleichmäßigen Voranbewegung eines Bodenverdichters periodische Bewegungen zu überlagern. Bei einer der Rotationsbewegung der Verdichterwalze überlagerten Oszillationsbewegung wird die Verdichterwalze durch z. B. im Inneren derselben angeordnete Unwuchtmassen zu einer periodischen Hin-Her-Rotation bzw. Vorwärts-Rückwärts-Rotation angeregt. Durch die Reibung zwischen einem Walzenmantel der Verdichterwalze und der Oberfläche des zu verdichtenden Untergrunds werden Schubkräfte in den Untergrund eingeleitet. Die dadurch hervorgerufenen Schubverzerrungen führen zu einer verstärkten Verdichtung des mit einer derartigen Verdichterwalze überfahrenen Untergrunds.

Die DE 35 90 610 C2 offenbart ein Verfahren, mit welchem beruhend auf der im Verlaufe einer derartigen Oszillationsbewegung einer Verdichterwalze erfassten Horizontalbeschleunigung der Verdichterwalze, also einer Beschleunigung im Wesentlichen in Richtung parallel zur Oberfläche des zu verdichtenden Untergrunds, der Verdichtungsgrad des zu verdichtenden Untergrunds ermittelt werden kann. Dabei wird berücksichtigt, dass im Verlaufe einer derartigen periodischen Oszillationsbewegung Phasen auftreten, in welchen die Beschleunigung der Verdichterwalze so groß ist, dass zwischen der Oberfläche des Walzenmantels und dem Untergrund Schlupf auftritt. In diesen Phasen bleibt die Horizontalbeschleunigung der Verdichterwalze im Wesentlichen konstant, während in Phasen, in welchen die Verdichterwalze bezüglich des zu verdichtenden Untergrunds im Wesentlichen keinen Schlupf aufweist, die Beschleunigung im Wesentlichen dem Muster einer periodischen Kurve, wie z. B. einer Sinuskurve, folgt. Beruhend auf der Frequenz der Oszillationsbewegung an sich und dem Verlauf der Horizontalbeschleunigung während Phasen, während welchen die Verdichterwalze keinen Schlupf zum Untergrund aufweist, kann bei diesem bekannten Verfahren auf den Verdichtungsgrad des zu verdichtenden Untergrunds geschlossen werden.

Der bei Durchführung eines Verdichtungsvorgangs unter Ausnutzung von periodischen Oszillationsbewegungen einer Verdichterwalze zwischen der Außenoberfläche des Walzenmantels und dem zu verdichtenden Untergrund auftretende Schlupf nimmt mit zunehmendem Verdichtungsgrad, im Allgemeinen also auch zunehmender Härte bzw. Steifigkeit des zu verdichtenden Untergrunds zu. Da dieser Untergrund im Allgemeinen mit abrasivem Material, also Gesteinsmaterial oder Gesteinsanteilen aufgebaut ist, kann ein übermäßig starker Schlupf zwischen der Verdichterwalze und dem zu verdichtenden Untergrund zu einem übermäßigen Verschleiß des Walzenmantels einer derartigen Verdichterwalze führen.

Es ist die Aufgabe der vorliegenden Erfindung, ein Verfahren zur Bestimmung eines durch eine Oszillationsbewegung einer Verdichterwalze hervorgerufenen Schlupfzustands der Verdichterwalze eines Bodenverdichters vorzusehen, mit welchem in einfacher und zuverlässiger Art und Weise ein Rückschluss auf den im Verlaufe eines Verdichtungsvorgangs auftretenden Schlupf einer Verdichterwalze bezüglich eines zu verdichtenden Untergrunds geschlossen werden kann.

Erfindungsgemäß wird diese Aufgabe gelöst durch ein Verfahren zur Bestimmung eines durch eine Oszillationsbewegung einer Verdichterwalze hervorgerufenen Schlupfzustandes der Verdichterwalze eines Bodenverdichters, umfassend die Maßnahmen:

a) Bereitstellen einer mit der Oszillationsbewegung der Verdichterwalze im Zusammenhang stehenden Beschleunigungsgröße,
b) beruhend auf der Beschleunigungsgröße, Bereitstellen eines Beschleunigungs-Frequenzspektrums,
c) beruhend auf dem Beschleunigungs-Frequenzspektrum, Bestimmen eines Schlupfzustands der Verdichterwalze.

Die vorliegende Erfindung nutzt die Erkenntnis, dass die in einer über die Zeit hinweg aufgenommenen bzw. bereitgestellten Beschleunigungsgröße enthaltenen Frequenzanteile des Beschleunigungs-Frequenzspektrums sich verändern, wenn zwischen einer derartigen Verdichterwalze und dem zu verdichtenden Untergrund Schlupf auftritt. Auch das Ausmaß des aufgetretenen Schlupfs und dessen unterschiedliche Charakteristik bei der Vorwärts- bzw. Rückwärtsbewegung im Verlauf einer Oszillationsperiode spiegeln sich im Beschleunigungs-Frequenzspektrum wieder. Beruhend auf dem Beschleunigungs-Frequenzspektrum kann also darauf geschlossen werden, ob die Verdichterwalze im Verlaufe einer periodischen Oszillationsbewegung sich im Wesentlichen ohne Schlupf auf dem zu verdichtenden Untergrund bewegt, oder ob, beispielsweise weil bereits ein vergleichsweise hoher Verdichtungsgrad erreicht wurde, Schlupf auftritt bzw. in welchem Ausmaß Schlupf auftritt. Diese erfindungsgemäß vorgesehene Kenntnis über das Vorhandensein von Schlupf bzw. das Ausmaß des Schlupfs kann beispielsweise dazu genutzt werden, um die Amplitude oder/und die Frequenz der Oszillationsbewegung zur Verminderung des auftretenden Schlupfs anzupassen.

Um eine definierte, insbesondere auch quantitative Aussage über den zwischen einer Verdichterwalze und einem zu verdichtenden Untergrund auftretenden Schlupf treffen zu können, kann weiter vorgesehen sein, dass die Maßnahme c) das Bestimmen eines den Schlupfzustand der Verdichterwalze repräsentierenden Schlupfindikators umfasst.

Bei einer vorteilhaften Weiterbildung des erfindungsgemäßen Verfahrens kann vorgesehen sein, dass bei der Maßnahme a) die Beschleunigungsgröße beruhend auf einer Beschleunigung der Verdichterwalze im Wesentlichen in einer Richtung parallel zu einer Oberfläche eines zu verdichtenden Untergrundes bereitgestellt wird. Der Übergang in einen Schlupfzustand im Verlaufe der Oszillationsbewegung einer Verdichterwalze wird im Allgemeinen dann auftreten, wenn die Umfangsbeschleunigung der Verdichterwalze ein bestimmtes Ausmaß überschreitet. Dies hat zur Folge, dass bei vergleichsweise großer Umfangsbeschleunigung beim Übergang in einen Schlupfzustand aufgrund des dann geminderten Vortriebs der Verdichterwalze deren Beschleunigung im Wesentlichen parallel zu dem zu verdichtenden Untergrund während der Schlupfphase näherungsweise konstant bleibt. Das Auftreten von Schlupf spiegelt sich in einer periodischen Beschleunigungsgröße in horizontaler Richtung im Wesentlichen durch Bereiche näherungsweise konstanter Beschleunigung wieder, was entsprechend auch im Beschleunigungs-Frequenzspektrum abgebildet wird.

Beispielsweise kann die Beschleunigung im Wesentlichen parallel zum zu verdichtenden Untergrund, also beispielsweise näherungsweise in horizontaler Richtung, dadurch erfasst oder ermittelt werden, dass die Beschleunigungsgröße auf der Grundlage eines Ausgangssignals wenigstens eines im Wesentlichen die Beschleunigung einer Verdichterwalzendrehachse erfassenden Beschleunigungssensors ermittelt wird. Es sei hier darauf hingewiesen, dass die Verdichterwalzendrehachse das geometrische Rotationszentrum der an einem Verdichterrahmen drehbar getragenen Verdichterwalze und somit eine fiktive Größe repräsentiert. Die Beschleunigung dieser Verdichterwalzendrehachse entspricht gleichermaßen der Beschleunigung der gesamten Verdichterwalze in Richtung im Wesentlichen parallel zu dem verdichtenden Untergrund.

Bei der Maßnahme b) kann das Beschleunigungsfrequenzspektrum in besonders einfacher Weise durch Fourier-Transformation, vorzugsweise schnelle Fourier-Transformation (FFT), der Beschleunigungsgröße ermittelt werden.

In einem Zustand, in welchem eine Verdichterwalze im Wesentlichen keinen Schlupf bezüglich des zu verdichtenden Untergrunds aufweist, wird die einzige Komponente oder die Hauptkomponente des Beschleunigungs-Frequenzspektrums bei einer der Oszillationsfrequenz der Verdichterwalze entsprechenden Frequenz sein. Da bei einem Übergang in einen Schlupfzustand grundsätzlich davon auszugehen ist, dass damit eine Änderung in der Amplitude bei dieser Oszillationsfrequenz auftreten wird, wird erfindungsgemäß vorgeschlagen, dass bei der Maßnahme c) der Schlupfzustand beruhend auf einer Veränderung der Amplitude bei der Oszillationsfrequenz der Verdichterwalze ermittelt wird.

Bei der Maßnahme c) kann gemäß einer besonders vorteilhaften Weiterbildung des erfindungsgemäßen Verfahrens ein Schlupfindikator beruhend auf einem Verhältnis der Amplitude des Beschleunigungs-Frequenzspektrums bei einer ersten Frequenz zur Amplitude des Beschleunigungs-Frequenzspektrums bei einer zweiten Frequenz ermittelt werden. Insbesondere kann dabei vorgesehen sein, dass eine Frequenz von erster Frequenz und zweiter Frequenz im Wesentlichen der Oszillationsfrequenz der Verdichterwalze entspricht. Die Oszillationsfrequenz ist im Beschleunigungsfrequenzspektrum diejenige Frequenz, welche mit der größten Amplitude auftreten wird. Insofern eignet sich diese Oszillationsfrequenz der Verdichterwalze besonders gut als Referenz dafür, ob bzw. in welchem Ausmaß der Grundbewegung der Verdichterwalze, also der periodischen Hin- und Her-Rotationsbewegung mit der Oszillationsfrequenz, andere Bewegungszustände, beispielsweise einen Schlupfzustand, überlagert sind, welche im Beschleunigungs-Frequenzspektrum weitere Frequenzanteile hervorrufen. Beispielsweise kann weiter vorgesehen sein, dass eine Frequenz von erster Frequenz und zweiter Frequenz im Wesentlichen einem ungeradzahligen Vielfachen oder einem geradzahligen Vielfachen der Oszillationsfrequenz der Verdichterwalze entspricht.

Die vorliegende Erfindung wird nachfolgend mit Bezug auf die beiliegenden Figuren detailliert beschrieben. Es zeigt:

Fig. 1    in prinzipartiger Darstellung eine auf einem zu verdichtenden Untergrund sich bewegende Verdichterwalze;

Fig. 2    in ihrer Darstellung a) die über der Zeit aufgetragene Horizontalbeschleunigung der Verdichterwalze der Fig. 1 und in ihrer Darstellung b) das durch Fourier-Transformation der Beschleunigung gewonnene Beschleunigungs-Frequenzspektrum;

Fig. 3    in ihrer Darstellung a) die Horizontalbeschleunigung der Verdichterwalze, aufgetragen über der Zeit, bei zwischen der Verdichterwalze und dem zu verdichtenden Untergrund symmetrisch auftretendem Schlupf und in ihrer Darstellung b) das BeschleunigungsFrequenzspektrum;

Fig. 4 in ihrer Darstellung a) die Horizontalbeschleunigung der Verdichterwalze, aufgetragen über der Zeit, bei zwischen der Verdichterwalze und dem zu verdichtenden Untergrund unsymmetrisch auftretendem Schlupf und in ihrer Darstellung b) das Beschleunigungs-Frequenzspektrum;

Fig. 5 in Abhängigkeit vom Ausmaß der durch Schlupf hervorgerufenen Amplitudenkappung die Amplitude bei der Oszillationsfrequenz f, die Amplitude beim Dreifachen der Oszillationsfrequenz f und einen Schlupf-Indikator.

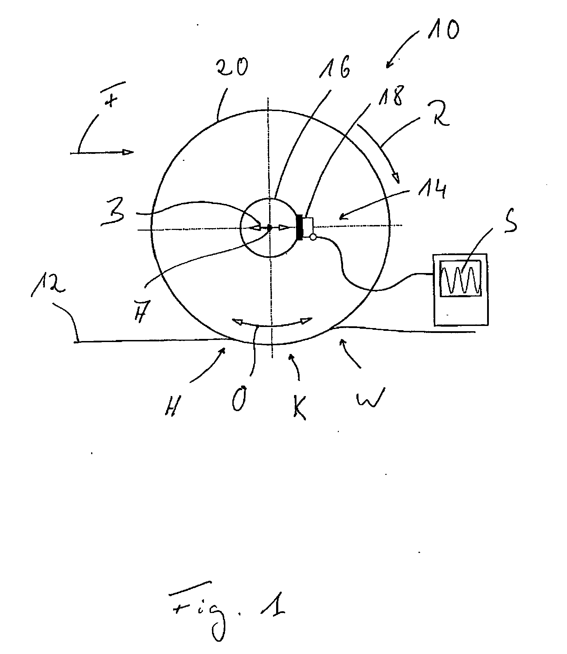

Die Fig. 1 zeigt in prinzipieller Darstellung eine Verdichterwalze 10 eines auf einem zu verdichtenden Untergrund 12 sich in einer Fahrtrichtung F voranbewegenden Bodenverdichters. Die Verdichterwalze 10 ist dabei um eine Verdichterwalzendrehachse A drehbar an einem Rahmen des Bodenverdichters getragen und dreht sich bei der Bewegung des Bodenverdichters in der Fahrtrichtung F in einer Drehrichtung R um die Verdichterwalzendrehachse A.

Durch eine beispielsweise im Inneren der Verdichterwalze 10 angeordnete Oszillationsmassenanordnung kann die Verdichterwalze 10 in eine periodische Oszillationsbewegung O versetzt werden, welche bei in der Fahrtrichtung F sich voranbewegendem Bodenverdichter und dabei in der Drehrichtung R sich um die Verdichterwalzendrehachse A drehender Verdichterwalze 10 dieser Rotation in der Drehrichtung R als periodische Bewegung überlagert ist.

Man erkennt in Fig. 1, dass durch ihr Aufstandsgewicht die Verdichterwalze 10 sich in den zu verdichtenden Untergrund 12 eindrückt, wobei ein Kontaktbereich K entsteht. In einem in der Fahrtrichtung F dem Kontaktbereich K vorangehenden Bereich W des zu verdichtenden Untergrunds 12 bildet sich eine Bugwelle des Aufbaumaterials des zu verdichtenden Untergrunds 12 aus. Eine entsprechende, wenngleich deutlich kleiner dimensionierte Materialanhäufung wird sich auch in einem in der Fahrtrichtung F hinten liegenden Bereich H ausbilden.

Der Verdichterwalze 10 ist eine allgemein mit 14 bezeichnete Beschleunigungssensoranordnung zugeordnet. Diese kann beispielsweise einen an einer Walzenlagerschale 16 angebrachten Beschleunigungssensor 18 umfassen. Dieser Beschleunigungssensor 18 ist beispielsweise als Einachs- oder Mehrachsbeschleunigungssensor ausgebildet und so angeordnet, dass er eine durch einen Pfeil B repräsentierte Beschleunigung der Verdichterwalze 10 bzw. der Verdichterwalzendrehachse A in einer zur Oberfläche des zu verdichtenden Untergrunds 12 im Wesentlichen parallelen Richtung sowohl in der Fahrtrichtung F als auch entgegengesetzt zur Fahrtrichtung F erfassen und ein entsprechendes Sensorsignal, repräsentiert durch die Kurve S in Fig. 1, ausgeben kann.

Bewegt sich die Verdichterwalze 10 ohne der Rotation in der Drehrichtung R überlagerter Oszillation O über den zu verdichtenden Untergrund 12, so wird mangels Änderung des Bewegungszustands der Beschleunigungssensor 18 keine Beschleunigung erfassen. Wird der Rotation in der Drehrichtung R die Oszillationsbewegung O überlagert, so erfasst der Beschleunigungssensor 18 eine entsprechend der Oszillationsfrequenz der Verdichterwalze 10 periodisch sich ändernde Beschleunigung. Da im Allgemeinen die Verdichterwalze 10 bzw. die diese drehbar tragenden Lagerschalen 16 über elastische Aufhängungsmittel an einem Rahmen eines Bodenverdichters getragen sind, kann die Verdichterwalze 10, hervorgerufen durch die Oszillationsbewegung O, eine entsprechend periodische Bewegung in der Fahrtrichtung F bzw. entgegengesetzt zur Fahrtrichtung F bezüglich des diese tragenden Rahmens des Bodenverdichters ausführen.

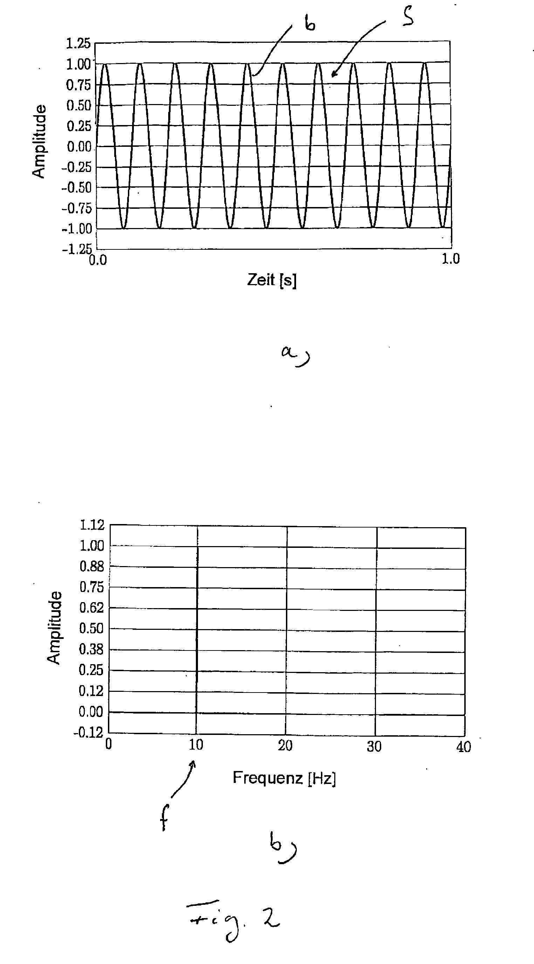

Die Fig. 2a) zeigt, aufgezeichnet über der Zeit, das Signal S, welches vom Beschleunigungssensor 18 ausgegeben wird bzw. ein ggf. bereits einer Filterung unterzogenes Signal, um hochfrequente und niederfrequente Störanteile zu beseitigen. Das eine Beschleunigungsgröße b repräsentierende Sensorsignal S ist im Idealfalle ein einer Sinusfunktion folgendes, periodisches Signal. Dieses weist im Wesentlichen nur Frequenzanteile im Bereich der Oszillationsfrequenz der Oszillationsbewegung O auf. In der Fig. 2b) ist diese Oszillationsfrequenz f als einziger Frequenzanteil des Beschleunigungs-Frequenzspektrums bei einer Frequenz von 10 Hz dargestellt. Es ist darauf hinzuweisen, dass dieses Beschleunigungs-Frequenzspektrum beispielsweise durch Fourier-Transformation, vorzugsweise durch schnelle Fourier-Transformation (FFT), aus dem Sensorsignal S bzw. der Beschleunigungsgröße b erhalten werden kann. Die Amplitude bei der einzig vorhandenen Frequenz ist in Fig. 2b) z. B. auf einen Wert von 1,00 normiert dargestellt. Es können anstelle normierter Werte auch Rohwerte verwendet werden.

Die Fig. 2a) veranschaulicht den Fall, in welchem die Verdichterwalze 10 ohne Schlupf zwischen einer Außenoberfläche eines Walzenmantels 20 derselben und dem zu verdichtenden Untergrund 12 sich bezüglich des Untergrunds 12 bewegt. Es sei auch hier noch einmal betont, dass dabei die Beschleunigungsgröße b nur die durch die Oszillationsbewegung O hervorgerufene periodische Beschleunigung der Verdichterwalze 10 im Wesentlichen z. B. in horizontaler Richtung, also in Richtung parallel zu Oberfläche des zu verdichtenden Untergrunds 12, repräsentiert, da die gleichmäßig, also unbeschleunigt ablaufende Rotation in der Drehrichtung R im Idealfalle keine Beschleunigungskomponenten hervorrufen wird.

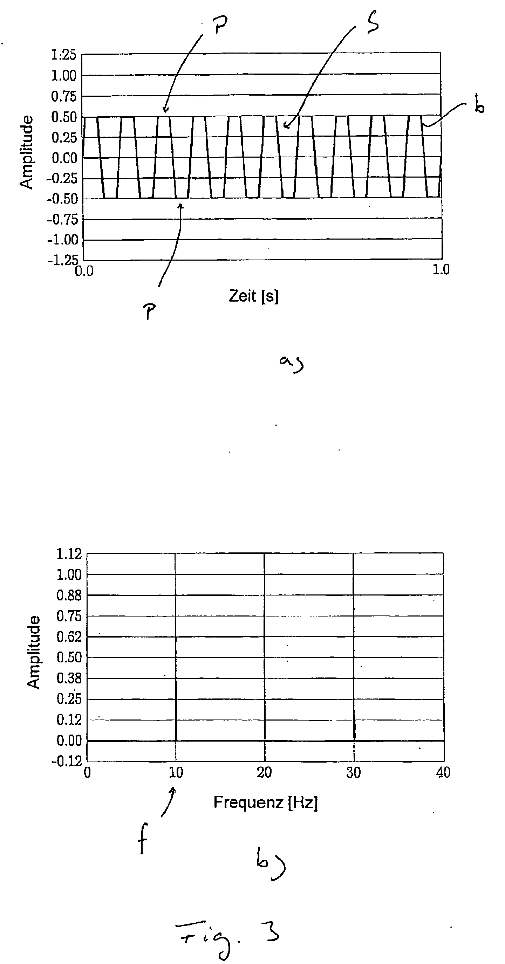

Tritt zwischen der Außenoberfläche des Walzenmantels 20 und dem zu verdichtenden Untergrund 12 Schlupf auf, beispielsweise weil durch zunehmenden Verdichtungsgrad der zwischen dem zu verdichtenden Untergrund 12 und dem Walzenmantel 20 wirksame Haftreibungskoeffizient abnimmt, so führt dies dazu, dass in Phasen, in welchen die im Verlaufe der Oszillationsbewegung O auftretende Beschleunigung maximal ist bzw. einen bestimmten Grenzwert überschreitet, die Verdichterwalze 10 aus einem Haftreibungszustand in einen Gleitreibungszustand bezüglich des zu verdichtenden Untergrunds 12, also einen Schlupfzustand, übergeht. In diesen in Fig. 3a) mit p gekennzeichneten Phasen der periodischen Oszillationsbewegung O bleibt die Beschleunigung, welche durch die über die Zeit aufgetragene Beschleunigungsgröße b repräsentiert ist, im Wesentlichen konstant. Bei für die Hin- und die Herbewegung der Oszillationsbewegung O symmetrischem Schlupfverhalten führt dies zu einer um den Amplitudenwert Null im Wesentlichen symmetrischen Kappung des periodischen Verlaufs der Beschleunigungsgröße b mit den Phasen p näherungsweise gleichbleibender Beschleunigung.

Das in Fig. 3b) dargestellte Beschleunigungs-Frequenzspektrum dieser im Schlupfzustand auftretenden bzw. ermittelten Beschleunigungsgröße b gemäß Fig. 3a) weist neben dem der Oszillationsfrequenz entsprechenden Frequenzanteil bei 10 Hz auch Frequenzanteile bei ungeradzahligen Vielfachen dieser Grundfrequenz, also der Oszillationsfrequenz f, auf. In der Fig. 3b) ist der Frequenzanteil beim Dreifachen der Oszillationsfrequenz f, also bei 30 Hz, erkennbar. Erkennbar ist auch, dass mit dem Auftreten derartiger weiterer Frequenzanteile die Amplitude bei der Grundfrequenz, also der Oszillationsfrequenz f, entsprechend abnimmt.

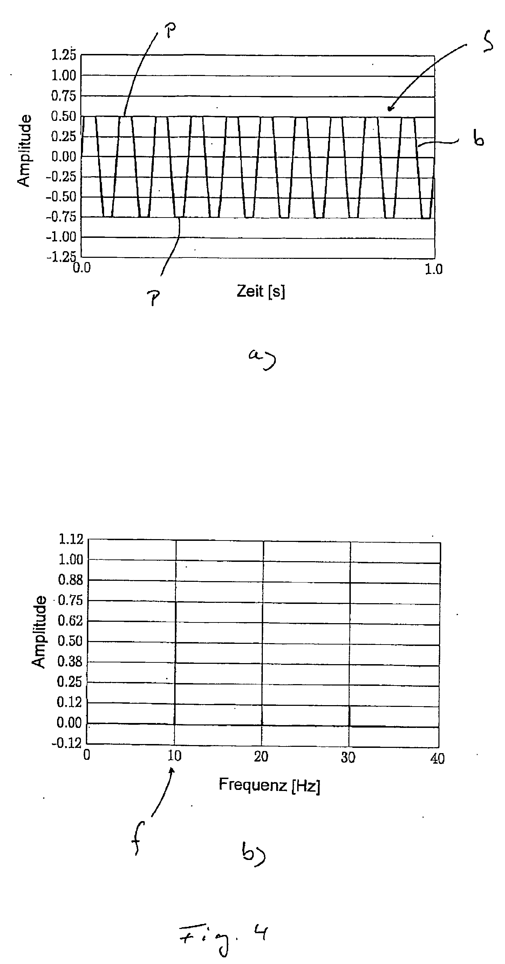

Die Fig. 4a) zeigt einen der Fig. 3a) entsprechenden Verlauf der Beschleunigungsgröße b, jedoch für einen Fall unsymmetrischen Schlupfverhaltens. Derartiges unsymmetrisches Schlupfverhalten tritt im Allgemeinen dann auf, wenn die in Fig. 1 erkennbare Bugwelle im Bereich W vorhanden bzw. deutlich ausgeprägt ist und insofern die Wechselwirkung der Außenoberfläche des Walzenmantels 20 mit dem zu verdichtenden Untergrund 12 abhängig ist von der Relativbewegungsrichtung. Ein derartiges unsymmetrisches Schlupfverhalten führt zu einer entsprechend unsymmetrischen Kappung der Beschleunigungsgröße b bzw. zu einer entsprechend unsymmetrischen Ausgestaltung der Phasen p, während welchen im Schlupfzustand die Beschleunigung näherungsweise unverändert bleibt.

Das in Fig. 4b) dargestellte Beschleunigungs-Frequenzspektrum der Beschleunigungsgröße b gemäß Fig. 4a) zeigt neben dem Anteil bei der Grundfrequenz, also der Oszillationsfrequenz f, und dem auch für den Fall unsymmetrischen Schlupfverhaltens vorhandenen Frequenzanteil beim Dreifachen der Grundfrequenz, also grundsätzlich bei ungradzahligen Vielfachen der Grundfrequenz, auch einen Frequenzanteil beim Zweifachen der Grundfrequenz, also bei 20 Hz, bzw. grundsätzlich Frequenzanteile bei geradzahligen Vielfachen der Grundfrequenz. Auch hier ist erkennbar, dass mit dem Auftreten derartiger zusätzlicher Frequenzanteile, deren Amplitude im Allgemeinen geringer ist, als die Amplitude bei der Grundfrequenz, also der Oszillationsfrequenz f, die Amplitude bei der Oszillationsfrequenz f abnimmt. Diese im Übergang der Fig. 2 zu den Fig. 3 bzw. 4 auftretende Veränderung in der Amplitude bei der Grundfrequenz, also der Oszillationsfrequenz f, einerseits, sowie das Auftreten von im schlupffreien Zustand im Wesentlichen nicht vorhandenen Frequenzanteilen dann, wenn Schlupf vorliegt, nutzt die vorliegende Erfindung dazu, eine Aussage über das Vorhandensein bzw. das Ausmaß von Schlupf der Verdichterwalze 10 bezüglich des zu verdichtenden Untergrunds 12 zu treffen. Insbesondere kann erfindungsgemäß vorgesehen sein, dass ein Schlupf-Indikator generiert wird, welcher beruhend auf den Amplituden von Frequenzanteilen im Beschleunigungs-Frequenzspektrum eine Aussage über das Vorhandensein von Schlupf, das Ausmaß des Schlupfs bzw. darüber, ob symmetrisches oder unsymmetrisches Schlupfverhalten vorliegt, machen kann. Beispielsweise kann ein derartiger Schlupf-Indikator wie folgt definiert sein:

$$SI = A(f_1)/A(f_2).$$

Hier ist also der Schlupf-Indikator SI als das Verhältnis der Amplituden verschiedener Frequenzanteile $f_1$ und $f_2$ im Beschleunigungs-Frequenzspektrum definiert. Einer dieser Frequenzanteile, vorzugsweise der Frequenzanteil $f_2$, kann der Oszillationsfrequenz f entsprechen, während beispielsweise der andere Frequenzanteil $f_1$ einem ungeradzahligen Vielfachen oder einem geradzahligen Vielfachen der Oszillationsfrequenz f entsprechen kann. Beispielsweise könnte als Frequenzanteil $f_1$ das Dreifache der Oszillationsfrequenz herangezogen werden.

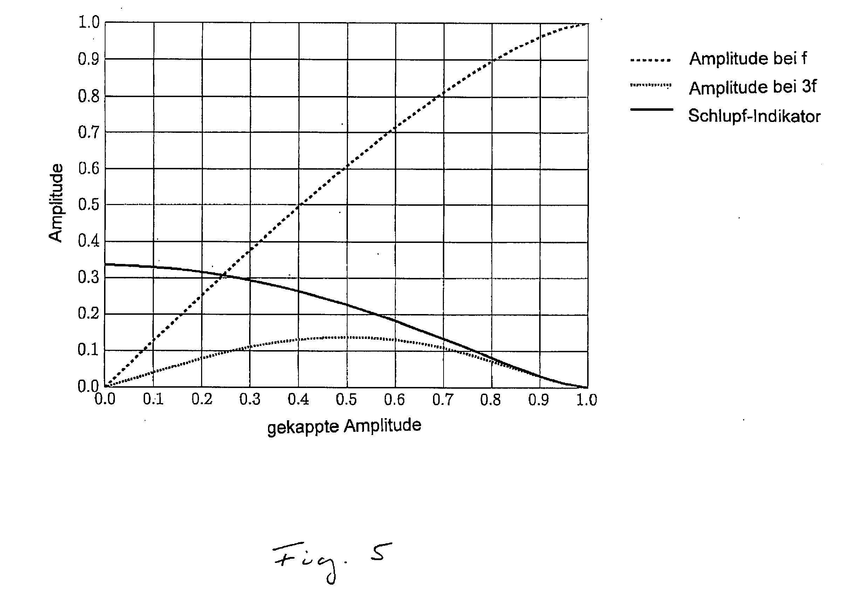

Die Fig. 5 zeigt für dieses Beispiel den Verlauf der Amplitude bei der Oszillationsfrequenz f als grobgepunktete Linie und den Verlauf der Amplitude bei dem Dreifachen der Oszillationsfrequenz f als feingepunktete Linie, aufgetragen über dem Ausmaß der Kappung der Amplitude der Beschleunigungsgröße b. Dabei entspricht die gekappte Amplitude 1,0 dem schlupffreien Zustand der Fig. 2a), während die abnehmende gekappte Amplitude den Zustand zunehmenden Schlupfs repräsentiert. Für den schlupffreien Zustand, also einer ungekappten Amplitude mit dem Wert von 1,0, ist die Amplitude bei der Oszillationsfrequenz f maximal, also beispielsweise beim normierten Wert 1,0. Mit zunehmender Kappung, also abnehmender gekappter Amplitude der Beschleunigungsgröße b, nimmt im Beschleunigungs-Frequenzspektrum auch die Amplitude bei der Frequenz f ab, während die Amplitude beim Dreifachen der Oszillationsfrequenz, also bei 30 Hz, zunimmt. Dementsprechend nimmt auch mit zunehmendem Schlupf der durch eine durchgezogene Linie in Fig. 5 dargestellte Schlupf-Indikator zu. Mit zunehmendem Schlupf, also auch zunehmender Kappung der Amplitude der Beschleunigungsgröße b treten in der Beschleunigungsgröße b deutlicher hervortretende Änderungen dahingehend auf, dass diese nur im Idealfall bei auftretendem Schlupf näherungsweise konstant bleibt, in der Praxis jedoch insbesondere mit größer werdendem Schlupf keinen konstanten Verlauf aufweisen wird. Dies hat zur Folge, dass mit beispielsweise unter die gekappte Amplitude von 0,5 abfallender Beschleunigungsgröße b zwar nach wie vor eine Aussage über den vorhandenen Schlupf getroffen werden kann, also der Schlupf-Indikator nach wie vor bestimmt werden kann, dieser jedoch einen anderen Verlauf aufweisen wird.

Das schlupfbedingte Auftreten bzw. Zunehmen von Frequenzanteilen im Beschleunigungs-Frequenzspektrum kann beispielsweise dazu genutzt werden, durch Versuche einen definierten Zusammenhang zwischen dem in der vorangehenden Art und Weise bestimmten Schlupf-Indikator und der Größe des tatsächlich aufgetretenen Schlupfs einer Verdichterwalze zu ermitteln, so dass nicht nur qualitativ eine Aussage darüber getroffen werden kann, dass Schlupf vorhanden ist bzw. Schlupf in übermäßig großem Ausmaß vorhanden ist, sondern auch quantitativ eine Aussage über den tatsächlich aufgetretenen Schlupf getroffen werden kann.

Eine Aussage über das Auftreten von Schlupf kann allein auch aus der Beobachtung der Amplitude beispielsweise bei der Oszillationsfrequenz f getroffen werden. Diese wird sich beim Übergang vom schlupffreien Zustand, also von einem Haftreibungszustand, in einen Schlupfzustand, also einen Gleitreibungszustand, deutlich verändern, so dass beispielsweise dann, wenn die Änderung dieser Amplitude bei der Oszillationsfrequenz f oder irgend einer anderen beobachteten Frequenz ein bestimmtes Ausmaß überschreitet oder/und die Änderungsrate ein bestimmtes Ausmaß überschreitet, auf den Übergang in einen Schlupfzustand geschlossen werden kann.

Bei einer alternativen Vorgehensweise kann als Beschleunigungsgröße, auf Grundlage welcher auf den Schlupfzustand geschlossen werden kann, beispielsweise auch als eine am Walzenmantel selbst oder einer damit fest verbundenen Baugruppe im Wesentlichen in Umfangsrichtung bzw. tangential zu einer Radiallinie bezüglich der Verdichterwalzendrehachse A auftretende Beschleunigung berücksichtigt werden. Auch der Walzenmantel 20 selbst wird durch die der Rotation in der Drehrichtung R überlagerte Oszillationsbewegung O in eine periodische Hin- und Herbewegung um die Verdichterwalzendrehachse A versetzt, was zu einem entsprechenden periodischen Beschleunigungsmuster einer in tangentialer Richtung bzw. in Umfangsrichtung orientierten Beschleunigungskomponente führt. Im schlupffreien Zustand wird auch diese Beschleunigungsgröße dem in Fig. 2a) dargestellten periodischen Beschleunigungsmuster folgen. Beim Übergang in einen Schlupfzustand, also einem Gleitreibungszustand, wird diese Beschleunigungsgröße jedoch nicht im Wesentlichen konstant bleiben, sondern wird aufgrund des Wegfalls eines wesentlichen Anteils einer Reaktionskraft einen deutlichen Anstieg aufweisen, beispielsweise einen nahezu sprunghaften, und vom im Wesentlichen sinusartigen Verlauf deutlich abweichenden Anstieg aufweisen. Auch dieser Übergang bildet sich im Beschleunigungs-Frequenzspektrum dadurch ab, dass neben dem Frequenzanteil bei der Oszillationsfrequenz f weitere Frequenzanteile auftreten und dass die Amplitude bei der Oszillationsfrequenz f abnehmen wird. Ebenso wie vorangehend beschrieben kann damit beispielsweise durch das Verhältnis der Amplituden bei verschiedenen Frequenzanteilen ein Schlupf-Indikator ermittelt werden oder kann durch Beobachtung der Veränderung der Amplitude beispielsweise bei der Oszillationsfrequenz f der Übergang zwischen einem Haftreibungszustand und einem Gleitreibungszustand erkannt werden.

Es sei abschließend noch einmal darauf hingewiesen, dass der vorangehend mit Bezug auf die Fig. 2 bis 4 beschriebene Verlauf der Beschleunigungsgröße und das daraus jeweils resultierende Beschleunigungs-Frequenzspektrum jeweils den idealisierten Fall veranschaulicht, in welchem einerseits die Oszillationsbewegung einer durch eine einzige Oszillationsfrequenz definierten periodischen Funktion folgt und bei Auftreten von Schlupf die Beschleunigung bis zur Wiederherstellung des Haftreibungszustands im Wesentlichen konstant bleibt. In der Realität werden im Verlaufe der Oszillationsbewegung der Oszillationsfrequenz bereits andere Frequenzanteile, gleichwohl mit geringerer Amplitude im Beschleunigungs-Frequenzspektrum überlagert sein und es werden bei Auftreten von Schlupf auch bei anderen Frequenzen als den geradzahligen bzw. ungeradzahligen Vielfachen der Oszillationsfrequenz Frequenzanteile auftreten. Dies beeinträchtigt jedoch nicht die Möglichkeit, z. B. zur Ermittlung des Schlupfindikators fest definierte Frequenzanteile mit ihren jeweils vorhandenen Amplituden zu berücksichtigen, insbesondere die Grundfrequenz, also die Oszillationsfrequenz f, und die geradzahligen oder ungeradzahligen Vielfachen derselben.

**Patentansprüche**

1. Verfahren zur Bestimmung eines durch eine Oszillationsbewegung (O) einer Verdichterwalze (10) hervorgerufenen Schlupfzustandes der Verdichterwalze (10) eines Bodenverdichters, umfassend die Maßnahmen:

    a) Bereitstellen einer mit der Oszillationsbewegung (O) der Verdichterwalze (10) im Zusammenhang stehenden Beschleunigungsgröße (b),

    b) beruhend auf der Beschleunigungsgröße (b), Bereitstellen eines Beschleunigungs-Frequenzspektrums,

    c) beruhend auf dem Beschleunigungs-Frequenzspektrum, Bestimmen eines Schlupfzustands der Verdichterwalze (10).

2. Verfahren nach Anspruch 1,
**dadurch gekennzeichnet, dass** die Maßnahme c) das Bestimmen eines den Schlupfzustand der Verdichterwalze (10) repräsentierenden Schlupfindikators umfasst.

3. Verfahren nach Anspruch 1 oder 2,
**dadurch gekennzeichnet, dass** bei der Maßnahme a) die Beschleunigungsgröße (b) beruhend auf einer Beschleunigung (B) der Verdichterwalze (10) im Wesentlichen in einer Richtung parallel zu einer Oberfläche eines zu verdichtenden Untergrundes (12) bereitgestellt wird.

4. Verfahren nach Anspruch 3,
**dadurch gekennzeichnet, dass** die Beschleunigungsgröße (b) auf der Grundlage eines Ausgangssignals (S) wenigstens eines im Wesentlichen die Beschleunigung (B) einer Verdichterwalzendrehachse (H) erfassenden Beschleunigungssensors (18) ermittelt wird.

5. Verfahren nach einem der Ansprüche 1 bis 4,
**dadurch gekennzeichnet, dass** bei der Maßnahme b) das Beschleunigungs-Frequenzspektrum durch Fourier-Transformation, vorzugsweise schnelle Fourier-Transformation, der Beschleunigungsgröße ermittelt wird.

6. Verfahren nach einem der Ansprüche 1 bis 5,
**dadurch gekennzeichnet, dass** bei der Maßnahme c) der Schlupfzustand beruhend auf einer Veränderung der Amplitude bei der Oszillationsfrequenz der Verdichterwalze ermittelt wird.

7. Verfahren nach einem der Ansprüche 1 bis 6,
**dadurch gekennzeichnet, dass** bei der Maßnahme c) ein Schlupfindikator beruhend auf einem Verhältnis der Amplitude des Beschleunigungs-Frequenzspektrums bei einer ersten Frequenz zur Amplitude des Beschleunigungs-Frequenzspektrums bei einer zweiten Frequenz ermittelt wird.

8. Verfahren nach Anspruch 7,
**dadurch gekennzeichnet, dass** eine Frequenz von erster Frequenz und zweiter Frequenz im Wesentlichen der Oszillationsfrequenz (f) der Verdichterwalze (10) entspricht.

9. Verfahren nach Anspruch 7 oder Anspruch 8,
**dadurch gekennzeichnet, dass** eine Frequenz von erster Frequenz und zweiter Frequenz im Wesentlichen einem ungeradzahligen Vielfachen oder einem geradzahligen Vielfachen der Oszillationsfrequenz (f) der Verdichterwalze (10) entspricht.

**Claims**

1. Method for the determination of a slippage state of the compactor roller (10) of a soil compactor caused by an oscillation movement (O) of a compactor roller (10), comprising the following measures:

a) providing an acceleration value (b) which is related to the oscillation movement (O) of the compactor roller (10),
b) on the basis of said acceleration value (b) providing an acceleration frequency spectrum,
c) on the basis of said acceleration frequency spectrum determining a slippage state of said compactor roller (10).

2. Method according to claim 1,
**characterized by** measure c) comprising the determination of a slippage indicator representing the slippage state of the compactor roller (10).

3. Method according to claim 1 or 2,
**characterized in that** in measure a) the acceleration value (b) is provided on the basis of an acceleration (B) of the compactor roller (10) substantially in a direction parallel to a surface of a subsoil (12) to be compacted.

4. Method according to claim 3,
**characterized by** said acceleration value (b) being determined on the basis of an output signal (S) of at least one acceleration sensor (18) detecting substantially the acceleration (B) of a compactor roller rotary axis (H).

5. Method according to one of claims 1 to 4,
**characterized in that** in measure b) the acceleration frequency spectrum is determined by Fourier transformation, preferably by fast Fourier transformation of the acceleration value.

6. Method according to one of claims 1 to 5,
**characterized in that** in measure c) the slippage state is determined on the basis of a change in the amplitude of the oscillation frequency of the compactor roller.

7. Method according to one of claims 1 to 6,
**characterized in that** in measure c) a slippage indicator is determined on the basis of the ratio of the amplitude of the acceleration frequency spectrum for a first frequency to the amplitude of the acceleration frequency spectrum for a second frequency.

8. Method according to claim 7,
**characterized by** one frequency out of the first and the second frequency corresponding substantially to the oscillation frequency (f) of the compactor roller (10).

**9.** Method according to claim 7 or claim 8, **characterized by** one frequency out of the first and the second frequency corresponding substantially to an odd-numbered multiple or an even multiple of the oscillation frequency (f) of the compactor roller (10).

**Revendications**

**1.** Méthode pour déterminer un état de glissement du cylindre de compactage (10) d'un compacteur de sol provoqué par un mouvement d'oscillation (O) du cylindre de compactage (10), comprenant les mesures suivantes:

> a) prévoir une valeur d'accélération (b) qui est reliée au mouvement d'oscillation (O) du cylindre de compactage (10),
> b) sur la base de ladite valeur d'accélération (b) prévoir un spectre de fréquences d'accélération,
> c) sur la base du spectre de fréquences d'accélération déterminer un état de glissement du cylindre de compactage (10).

**2.** Méthode selon la revendication 1, **caractérisée par** la mesure c) comprenant la détermination d'un indicateur de glissement représentant l'état de glissement du cylindre de compactage (10).

**3.** Méthode selon la revendications 1 ou 2, **caractérisée en ce que** dans la mesure a) la valeur d'accélération (b) est prévue sur la base d'une accélération (B) du cylindre de compactage (10), essentiellement dans une direction parallèle à une surface d'un sol (12) à compacter.

**4.** Méthode selon la revendication 3, **caractérisée par** la valeur d'accélération (b) étant déterminée sur la base d'un signal de sortie (S) d'au moins un capteur d'accélération (18) détectant essentiellement l'accélération (B) d'un axe de rotation du cylindre de compactage (H).

**5.** Méthode selon une des revendications 1 à 4, **caractérisée en ce que** dans la mesure b) le spectre de fréquences d'accélération est déterminé par une transformation de Fourier, de manière préférée par une transformation de Fourier rapide, de la valeur d'accélération.

**6.** Méthode selon une des revendications 1 à 5, **caractérisée en ce que** dans la mesure c) l'état de glissement est déterminé sur la base d'un changement de l'amplitude de la fréquence d'oscillation du cylindre de compactage.

**7.** Méthode selon une des revendications 1 à 6, **caractérisée en ce que** dans la mesure c) un indicateur de glissement est déterminé sur la base d'un rapport de l'amplitude du spectre de fréquences d'accélération pour une première fréquence à l'amplitude du spectre de fréquences d'accélération pour une deuxième fréquence.

**8.** Méthode selon la revendication 7, **caractérisée par** une fréquence de la première fréquence et de la deuxième fréquence correspondant essentiellement à la fréquence d'oscillation (f) du cylindre de compactage (10).

**9.** Méthode selon la revendication 7 ou la revendication 8, **caractérisée par** une fréquence de la première fréquence et de la deuxième fréquence correspondant essentiellement à un multiple impair ou à un multiple pair de la fréquence d'oscillation (f) du cylindre de compactage (10).

Fig. 1

Fig. 2

a)

b)

Fig. 3

a)

b)

Fig. 4

Fig. 5

EP 2 913 436 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3590610 C2